# EUROPÄISCHE PATENTSCHRIFT

(11) **EP 4 165 370 B1**
(45) Veröffentlichungstag und Bekanntmachung des Hinweises auf die Patenterteilung: **08.10.2025**
(21) Anmeldenummer: 21729433.9
(22) Anmeldetag: 25.05.2021
(51) Int. Cl.: G01C 21/00, G01C 21/32

(54) **VERFAHREN ZUM BEWERTEN EINER DIGITALEN KARTE, SOWIE BEWERTUNGSSYSTEM**
METHOD FOR EVALUATING A DIGITAL MAP, AND EVALUATION SYSTEM
PROCÉDÉ D'ÉVALUATION D'UNE CARTE NUMÉRIQUE ET SYSTÈME D'ÉVALUATION

(30) Priorität: 15.06.2020 DE 102020115743
(43) Veröffentlichungstag der Anmeldung: 19.04.2023
(73) Patentinhaber: VOLKSWAGEN AKTIENGESELLSCHAFT, 38440 Wolfsburg (DE); MAN Truck & Bus SE, 80995 München (DE)
(72) Erfinder: WILBERS, Daniel, 38440 Wolfsburg (DE); BOHLKE, Henrik, 49456 Bakum (DE); RECH, Bernd, 38556 Bokensdorf (DE); MERFELS, Christian, 38102 Braunschweig (DE); KOCH, Niklas, 38448 Wolfsburg (DE); JÜRGENS, Stefan, 38106 Braunschweig (DE); HUNGAR, Constanze, 38100 Braunschweig (DE)
(74) Vertreter: Hofstetter, Schurack & Partner
(86) Internationale Anmeldenummer: PCT/EP2021/063774
(87) Internationale Veröffentlichungsnummer: WO 2021/254730

(56) Entgegenhaltungen:
- WO-A1-2020/045426
- DE-T5- 112019 004 285
- DE-T5- 112019 004 316
- JP-A- 2020 038 361

## Beschreibung

Ein Aspekt der Erfindung betrifft ein Verfahren zum Bewerten einer digitalen Karte. Ein weiterer Aspekt der Erfindung betrifft ein elektronisches Bewertungssystem zum Bewerten einer digitalen Karte.

Für die Eigenlokalisierung von autonom fahrenden Fahrzeugen sind verschiedene Konzepte bekannt. Bei einigen werden Strukturen und Muster in der Fahrzeugumgebung von den Fahrzeugsensoren erkannt und mit entsprechenden Eintragungen in einer digitalen Karte verglichen. Derartige Strukturen werden auch als Landmarken bezeichnet. Diese Konzepte setzen voraus, dass die Fahrzeuge mit aktuellen und verifizierten Landmarken-Karten ausgestattet sind.

Um diese digitalen Karten aktuell zu halten, können beispielsweise Messdaten von speziellen Messfahrzeugen oder von Fahrzeugen aus der Fahrzeugflotte auf einem Backend aggregiert und anschließend Veränderungen festgestellt werden. Die festgestellten Abweichungen können dann als Aktualisierung der Karte an die Fahrzeuge ausgegeben werden.

Alternativ ist es möglich, dass jedes Fahrzeug für sich eine interne Karte pflegt, Abweichungen zwischen der Karte und seinen Messungen selbst feststellt und bewertet und selbst Aktualisierungs-Hypothesen erzeugt. Diese Aktualisierungs-Hypothesen kann das Fahrzeug für seine Fahraufgabe und für seine Eigenlokalisierung verwenden. Zusätzlich kann es vorzugsweise diese Aktualisierungs-Hypothesen einem Backend zur Verfügung stellen, insbesondere über eine drahtlose Übertragung, insbesondere eine Funkübertragung.

Bei beiden Alternativen ist erforderlich, dass diese Veränderungen an den digitalen Karten keine systematischen Fehler enthalten und innerhalb der Fehlertoleranzen liegen. Dies ist insbesondere für einen Langzeitbetrieb wichtig. Dies stellt eine wesentliche Voraussetzung der automatischen Fahrfunktion eines Fahrzeugs dar, welche abhängig von der Positionsschätzung des Fahrzeuglokalisierungssystems sind.

Aus der DE 10 2016 225 213 A1 sind ein Verfahren und ein System zur Lokalisierung eines Kraftfahrzeugs bekannt. Das System ist zur Durchführung eines Verfahrens zur Lokalisierung eines Kraftfahrzeugs vorgesehen. Mit einer Recheneinheit des Systems erfolgt eine Erstellung von Landmarkenhypothesen. Es wird ein Kartenabgleich zwischen einer lokalen Belegungskarte und einer globalen Belegungskarte durchgeführt. Mithilfe eines Map-Matching-Algorithmus zwischen einem Umfeldmodell und der globalen Belegungskarte wird eine Schätzung der globalen Fahrzeugpose durchgeführt.

Aus der DE 10 2017 105 086 A1 ist ein Aktualisieren einer Landmarkenkarte bekannt. Für diese Klassifikation von Landmarkenvergleichsvorgängen sind verschiedene Klassen vorgesehen. Das Aktualisieren der Landmarkenkarte kann in dem Fahrzeug erfolgen.

Bei den bekannten Verfahren und Systemen werden anhand von Landmarkenhypothesen zwar digitale Karten erzeugt und aktualisiert, aber diese Aktualisierung wird nicht weiter beurteilt beziehungsweise bewertet. Ist eine derartige Aktualisierung vorgenommen, so wird sie nicht weiter überprüft. Dies kann zu Nachteilen führen. Denn aufgrund von Messfehlern und/oder anderweitigen Fehlereinflüssen können Situationen auftreten, in denen diese Aktualisierungen nachteilig sind, da sie ungenau sind.

Aus der WO 2020/045426 A1 und der JP 2020 038361 A sind Verfahren zum Bewerten einer digitalen Karte bekannt.

Es ist Aufgabe der vorliegenden Erfindung, ein Verfahren und ein elektronisches Bewertungssystem zu schaffen, bei welchem die Erstellung einer digitalen Karte verbessert ist und ein gegebenenfalls vorliegender Aktualisierungszustand einer digitalen Karte bewertet wird.

Diese Aufgabe wird durch ein Verfahren und ein Bewertungssystem gemäß den unabhängigen Ansprüchen gelöst.

Ein Aspekt der Erfindung betrifft ein Verfahren zum Bewerten einer digitalen Karte, bei welchem folgende Schritte durchgeführt werden:
- Erfassen der Umgebung eines Fahrzeugs mit zumindest einer Erfassungseinheit des Fahrzeugs;
- Erstellen einer relativen Karte der Umgebung auf Basis der erfassten Informationen mit relativen Positionen von erfassten Landmarken in der Umgebung;
- Bereitstellen einer globalen Karte der Umgebung mit globalen Positionen von Landmarken;
- Erzeugen von mehreren Aktualisierungs-Hypothesen für die digitale Karte auf Basis von Positionsinformationen von Landmarken in der relativen Karte und/oder auf Basis von Positionsinformationen von Landmarken in der globalen Karte, wobei eine Aktualisierungs-Hypothese vorzugsweise zumindest dann erzeugt wird, wenn zumindest eine, insbesondere Art einer, Positionsabweichung für eine Landmarke zu einer globalen Position zumindest eines Referenzobjekts auftritt,
- Bestimmen einer Fehlerstatistik für zumindest einige der Positionsabweichungen;
- Auswerten der Fehlerstatistik; und
- abhängig von der Auswertung der Fehlerstatistik beurteilen, ob zumindest eine Aktualisierungs-Hypothese der digitalen Karte, insbesondere die gesamte digitale Karte, für eine Eigenlokalisierung des Fahrzeugs tauglich ist.

Durch eine derartige Vorgehensweise ist es daher ermöglicht, dass die digitale Karte genauer bewertet wird. Es werden somit insbesondere nicht mehr automatisch Aktualisierungen der digitalen Karte vorgenommen und diese ohne weitere Überprüfung beibehalten. Vielmehr wird mit dem vorgeschlagenen Verfahren eine potentielle Aktualisierung der digitalen Karte nochmals überprüft. Es kann also vorgesehen sein, dass eine potentielle Aktualisierung der digitalen Karte bereits vorgenommen wurde und die dann aktualisierte digitale Karte durch das vorgeschlagene Verfahren nochmals überprüft wird. Insbesondere erfolgt dies anhand der nochmaligen Überprüfung der Aktualisierungs-Hypothesen. Insbesondere ist dabei das Bestimmen der Fehlerstatistik, das Auswerten der Fehlerstatistik und das Beurteilen, ob zumindest eine Aktualisierungs-Hypothese der digitalen Karte für die Eigenlokalisierung des Fahrzeugs tauglich ist, wobei dies abhängig von der Auswertung der Fehlerstatistik beurteilt wird, wesentlich. Es kann also praktisch in einem Ausführungsbeispiel die digitale Karte durch die eine oder mehreren Aktualisierungs-Hypothesen bereits aktualisiert werden, um dann diese aktualisierte digitale Karte durch diese oben genannten Vorgänge mit der Fehlerstatistik und deren Auswertung nochmals zu überprüfen. Es kann jedoch auch vorgesehen sein, dass diese Aktualisierungs-Hypothesen noch nicht in eine Aktualisierung der digitalen Karte übergeführt wurden und somit diese Aktualisierungs-Hypothesen in diesem Ausführungsbeispiel vor dem Aktualisieren der digitalen Karte mit diesen Aktualisierungs-Hypothesen nochmals überprüft werden.

Zentral ist es daher insbesondere, dass erzeugte Aktualisierungs-Hypothesen, die zunächst das Erfordernis einer Aktualisierung der digitalen Karte bedeuten, durch ein ganz spezifisches Szenario mit der Fehlerstatistik, deren Auswertung und den dann noch folgenden Schritten zusätzlich nochmals überprüft werden.

Eine Positionsabweichung kann durch das Fahrzeug selbst erkannt werden. Beispielswiese kann eine erfasste Landmarke von einer vorher vorhandenen und in der globalen Karte bereits vorhandenen globalen Position abweichen. Eine solche Situation führt beispielsweise zu einer Landmarken-Positionsabweichungs-Aktualisierungs-Hypothese. Diese beschreibt ein mögliches Aktualisierungserfordernis der globalen Karte aufgrund einer derartigen Positionsabweichung. Es kann zusätzlich oder stattdessen auch eine Landmarke beim Erfassungsvorgang erfasst werden, die vorher in der globalen Karte nicht vorhanden ist und somit für diese Landmarke keine globale Position in der globalen Karte vorliegt. Eine solche Situation führt beispielsweise zu einer Landmarken-Ergänzungs-Aktualisierungs-Hypothese. Diese beschreibt ein mögliches Aktualisierungserfordernis der globalen Karte aufgrund einer derartigen Landmarkenergänzung. Es kann zusätzlich oder stattdessen auch eine Situation vorliegen, bei welcher eine bisher vorhandene Landmarke, die in der globalen karte vorhanden ist, aktuelle nicht mit der Erfassungseinheit erfasst wird. Eine solche Situation führt beispielsweise zu einer Landmarken-Entfernungs-Aktualisierungs-Hypothese. Diese beschreibt ein mögliches Aktualisierungserfordernis der globalen Karte aufgrund einer derartigen nicht mehr vorhandenen Landmarke, die gegebenenfalls aus der globalen Karte entfernt werden muss. Es kann zusätzlich oder stattdessen auch eine Information über eine Landmarke von einem anderen Fahrzeug und/oder einer anderen Einheit vorliegen. Insbesondere, wenn das Fahrzeug diese Information selbst, insbesondere aktuell, nicht mit ihrer Erfassungseinheit erfassen kann. Eine solche Situation führt beispielsweise zu einer Landmarken-Externinformation-Aktualisierungs-Hypothese. Es können somit verschiedenste Szenarien auftreten, die zu unterschiedlichen Arten von Aktualisierungs-Hypothesen führen. Die genannten Szenarien sind nicht abschließend zu verstehen. Sie stellen Beispiele für verschiedene Arten von Positionsabweichungen dar. Alle Szenarien werden jedoch im vorliegenden Kontext so verstanden, dass sie Positionsinformationen und im vorliegenden Kontext "Positionsabweichungen" darstellen und eine Aktualisierungs-Hypothese vorzugsweise zumindest dann erzeugt wird, wenn zumindest eine Art einer solchen Positionsabweichung für eine Landmarke aufgetreten ist. Insbesondere in Bezug zu einer globalen Position zumindest eines Referenzobjekts auftritt.

Insbesondere erfolgt somit in besonders vorteilhafter Weise das automatisierte Überprüfen beziehungsweise Bewerten der vom Fahrzeug selbst erzeugten Aktualisierungs-Hypothesen. Insbesondere erfolgt dieses automatisierte Überprüfen wiederum durch das Fahrzeug selbst. Dieses Überprüfen der Aktualisierungs-Hypothesen erfolgt hinsichtlich Abweichungen bezüglich der spezifizierten Fehlertoleranz.

Durch eine derartige Vorgehensweise des vorgeschlagenen Verfahrens lassen sich einerseits digitale Karten genauer erzeugen und potentielle Aktualisierungen dahingehend bewerten und abschätzen, ob sie auch tatsächlich für eine weitere Verwendung taugen. Damit ist es ermöglicht, dass Fehlereinflüsse wie Messtoleranzen und/oder Fehler der Erfassungseinheit und dergleichen verbessert erkannt werden können. Damit können derartige Fehlereinflüsse auch verbessert eliminiert bzw. berücksichtigt werden.

Es wird vorgesehen, dass für ein Erzeugen einer Aktualisierungs-Hypothese eine mit der Erfassungseinheit des Fahrzeugs erfasste Landmarke mit deren relativer Position nach einem Zufallsprinzip, insbesondere von dem Bewertungssystem, ausgewählt wird. Die globale Position dieser zufällig aus der globalen Karte ausgewählten Landmarke wird bewertet. Es wird also bei diesem automatischen Beurteilungsszenario auch ein Zufallsprinzip zugrundegelegt. Auch dadurch ist eine Verbesserung ermöglicht. Denn indem nicht nur eine spezifische Art von Landmarken für das Beurteilungsszenario zugrundegelegt wird, kann durch diesen Zufallsgenerator eine vorteilhafte Streuung bezüglich Landmarken erfolgen, die für das Beurteilungsszenario berücksichtigt werden. Damit ist die Erstellung des Beurteilungsergebnisses repräsentativer.

Eine relative Position ist eine derartige, die durch die Erfassungseinheit des Fahrzeugs definiert wird. Die Position ist daher im Koordinatensystem des Fahrzeugs gegeben. Demgegenüber ist eine globale Position eine Position im Weltkoordinatensystem.

Die Bewertung der globalen Position ist die wichtigere. Denn sie ist diejenige, die auch einer aktualisierten digitalen Karte zugrundegelegt wird beziehungsweise welche in die digitale Karte eingetragen wird.

Es wird bei dieser Bewertung die relative Position dieser ausgewählten Landmarke nicht berücksichtigt. Die globale Position dieser ausgewählten Landmarke wird in einer vorteilhaften Ausführung abhängig von relativen Positionen anderer Landmarken, die bei dem Erfassungsvorgang durch die zumindest eine Erfassungseinheit erfasst wurden, berechnet. Abhängig von dieser berechneten globalen Position wird ein Fehlerterm bestimmt, der der Fehlerstatistik bereitgestellt wird. Dies ist eine besonders vorteilhafte Ausführung. Denn es wird somit diese ausgewählte Landmarke bei der Bewertung unberücksichtigt belassen. Es wird bei diesem Ausführungsbeispiel somit nicht die vorhandene globale Position dieser ausgewählten Landmarke bei der Bewertung berücksichtigt. Vielmehr wird diese globale Position nicht herangezogen, sondern anderweitig berechnet. Für diese Berechnung werden die relativen Positionen von anderen Landmarken herangezogen. Gerade bei der Erzeugung der Fehlerstatistik lassen sich dadurch Verbesserungen erzielen. Insbesondere sind dadurch wiederum genauere Analysen und Rückschlüsse über die Wichtigkeit der globalen Position dieser ausgewählten Landmarke ermöglicht.

Es wird die berechnete globale Position der ausgewählten Landmarke mit der globalen Position dieser Landmarke aus der globalen Karte verglichen. Bei einem Auftreten einer Positionsabweichung zwischen diesen globalen Positionen wird diese Positionsabweichung als Fehlerterm gebildet und bereitgestellt. Es wird insbesondere abhängig von diesen Positionsabweichungen somit ein Fehlerterm gebildet. Dieser repräsentiert dann insbesondere die bestimmte Positionsabweichung. Durch eine derartige Vorgehensweise lässt sich nicht nur hier, sondern auch bei den oben genannten vorteilhaften Ausführungen eine besonders detaillierte und genaue Bewertung vornehmen, ob eine aktualisierte digitale Karte oder eine zur Aktualisierung mit Aktualisierungs-Hypothesen vorgesehene digitale Karte für die Eigenlokalisierung des Fahrzeugs tauglich ist. Es ist somit eine besonders genaue und tiefgehende Detailanalyse insbesondere betreffend ein Aktualisierungserfordernis der digitalen Karte ermöglicht. Die bereits erzeugten Aktualisierungs-Hypothesen können in dem Zusammenhang quasi nachfolgend verbessert und detaillierter beurteilt werden, ob sie für die Eigenlokalisierung des Fahrzeugs in einer digitalen Karte tatsächlich tauglich sind.

In einer vorteilhaften Ausführung wird vorgesehen, dass die Fehlerstatistik dahingehend ausgewertet wird, ob die Positionsabweichungen auf einen Fehler der Erfassungseinheit beruhen. Die Verwendung zumindest der Aktualisierungs-Hypothesen, insbesondere die Verwendung der digitalen Karte, für die Eigenlokalisierung des Fahrzeugs wird bejaht, wenn die Positionsabweichungen auf einem Fehler der Erfassungseinheit beruhen. Dies ist ein weiterer vorteilhafter Vorgang. Denn somit können die aufgetretenen Positionsabweichungen feingliedriger und detaillierter analysiert werden. Es ist somit die Möglichkeit geschaffen, zu erkennen, worauf eine derartige Positionsabweichung gegebenenfalls beruht. Wird erkannt, dass ein derartiger Fehler aufgrund der Erfassungseinheit aufgetreten ist, so ist es dann auch ermöglicht, dass eine derartige systembedingte Abweichung bei der zukünftigen Eigenlokalisierung des Fahrzeugs berücksichtigt wird. Damit ist es dann einfach ermöglicht, die digitale Karte, die dann aktualisiert wurde, für die Eigenlokalisierung zugrundezulegen. Denn es ist dann auch bekannt, welcher Fehler durch die Erfassungseinheit einfließt und wie dieser dann zu kompensieren ist.

In einer sehr vorteilhaften Ausführung wird der Bewertungsprozess, wie er oben dargelegt wurde, vollständig im Fahrzeug selbst durchgeführt. Damit ist eine schnelle Bewertung ermöglicht. Gerade dann, wenn das Fahrzeug bewegt wird und sowohl die Eigenlokalisierung auf Basis der digitalen Karte erfolgen soll, als auch die Beurteilung einer erfolgten oder potentiellen Aktualisierung der digitalen Karte erfolgen soll, ist dies ein vorteilhaftes Vorgehen.

In einem Ausführungsbeispiel wird vorgesehen, dass ein Bewertungsergebnis des Bewertungsprozesses, welches im Fahrzeug erzeugt wurde, an ein zum Fahrzeug externes Backend übertragen wird. Im Backend werden die Bewertungsergebnisse einer Fahrzeugflotte mit mehreren Fahrzeugen abgelegt. Im Backend wird das Bewertungsergebnis mit diesen Bewertungsergebnissen der Fahrzeugflotte verglichen. Abhängig von dem Vergleich wird ein End-Bewertungsergebnis, insbesondere durch das Backend, erzeugt. Dieses End-Bewertungsergebnis wird dem Fahrzeug bereitgestellt. Durch eine derartige Vorgehensweise können somit einfach und zuverlässig auch Informationen von anderen Fahrzeugen in die Bewertung einfließen, ob eine erfolgte oder potentielle Aktualisierung der digitalen Karte tauglich ist. Obwohl der Aufwand diesbezüglich höher sein kann, kann die Genauigkeit dieser Beurteilung erhöht werden.

Vorzugsweise wird bei dem Auswerten der Fehlerstatistik ein gemittelter Fehler für das gesamte System vorgegeben. Fehlerterme, die die Positionsabweichung charakterisieren, werden gemittelt. Dieser gemittelte Fehler wird mit dem gemittelten Fehlerterm verglichen. Abhängig von dem Vergleich wird beurteilt, ob zumindest eine Aktualisierungs-Hypothese der digitalen Karte, insbesondere die gesamte digitale Karte, für eine Eigenlokalisierung des Fahrzeugs tauglich ist oder nicht. Die Bereitstellung einer derartigen Fehlerstatistik mit mehreren Fehlertermen ermöglicht eine noch genauere Aussage über die gemessenen und/oder berechneten Positionsabweichungen. Eine derartige Fehlerstatistik erlaubt es somit, genau zu analysieren, welche Abweichungen tatsächlich vorliegen. Damit kann genauer und detaillierter darauf geschlossen werden, ob Fehler der Erfassungseinheit und/oder andere Fehlereinflüsse vorliegen. Durch eine derartige detailliertere Analyse, welche Fehler vorliegen, kann auch die Beurteilung präzisiert werden, ob Aktualisierungs-Hypothesen zur Aufnahme oder Beibehaltung in einer digitalen Karte tauglich sind, insbesondere bezüglich der mit der digitalen Karte gewünschten und erforderlichen Eigenlokalisierung des Fahrzeugs.

In einer vorteilhaften Ausführung wird vor dem Erzeugen von Aktualisierungs-Hypothesen ein Kartenabgleich zwischen der globalen Karte und der relativen Karte durchgeführt. Dies ist auch als Map-Matching zu bezeichnen. In einer vorteilhaften Ausführung wird auf Basis des Kartenabgleichs eine, insbesondere aktuelle, globale Position des Fahrzeugs bestimmt. Es wird also in vorteilhafter Weise erkannt, wo sich das Fahrzeug global befindet.

Vorzugsweise wird abhängig von diesem Kartenabgleich eine Zuordnung zwischen relativen Positionen von Landmarken und globalen Positionen von Landmarken durchgeführt. Insbesondere erfolgt eine diesbezügliche Zuordnung zwischen denjenigen relativen Landmarken, die mit der Erfassungseinheit erfasst wurden.

Vorzugsweise wird bei diesem Kartenabgleich in einer vorteilhaften Ausführung eine Landmarke herausgenommen beziehungsweise bleibt unberücksichtigt. Insbesondere wird eine globale Position dieser Landmarke, die insbesondere zufällig ausgewählt wird, nicht berücksichtigt. Das weitere Procedere zur Beurteilung dieser ausgewählten Landmarke kann dann so erfolgen, wie es bereits oben in vorteilhaften Ausführungsbeispielen erläutert wurde.

Insbesondere wird eine derartige Landmarke, die herausgenommen wird beziehungsweise bei der Beurteilung nicht berücksichtigt wird, auch als Prüf-Landmarke bezeichnet.

Insbesondere wird anhand der Fehlerstatistik beurteilt, ob das System, insbesondere die zumindest eine Erfassungseinheit, so funktioniert, wie es angenommen wird beziehungsweise wie es beabsichtigt ist.

Es wird in einer vorteilhaften Ausführung durch die Fehlerstatistik und deren Auswertung eine Fehlerschätzung für das gesamte System durchgeführt.

In einer vorteilhaften Ausführung ist der gemittelte Fehler des gesamten Systems 0. Durch die oben genannten erzeugten Fehlerterme kann ein gesamter Ist-Fehlerterm bestimmt werden, der durch den gemittelten Fehlerterm definiert ist. Ist dieser gemittelte Fehlerterm ebenfalls 0 und entspricht somit dem gemittelten, vorgegebenen Fehler, so liegt ein funktionsfähiges, fehlerfreies System vor. Ist der gemittelte Fehlerterm abweichend von dem gemittelten Fehler, kann diese Abweichung wiederum beurteilt werden. Liegt sie innerhalb eines vorgebbaren Toleranzintervalls, kann die Aktualisierungs-Hypothese beibehalten werden und somit auch die aktualisierte digitale Karte oder die dann damit zu aktualisierende digitale Karte insbesondere der Eigenlokalisierung des Fahrzeugs verwendet werden. Ist die Abweichung größer als ein vorgegebener Wert, so ist die Aktualisierungs-Hypothese nicht tauglich. Sie sollte insbesondere dann verworfen werden.

In einem weiteren Ausführungsbeispiel kann vorgesehen sein, dass bei einem Erkennen, dass eine mit der Erfassungseinheit erfasste Landmarke kein Pendant in der globalen Karte hat, eine globale Position dieser neuen Landmarke abhängig von relativen Positionen von anderen, mit der Erfassungseinheit, insbesondere beim Erfassungsvorgang, erfassten Landmarken berechnet wird. Wird also erkannt, dass eine aktuell erfasste Landmarke neu hinzugekommen ist, kann eine globale Position dieser Landmarke abhängig von relativen Positionen von anderen Landmarken bestimmt werden. Da eine derartige neue Landmarke bisher nicht vorhanden war und somit keine globale Position in der globalen Karte bekannt ist und vorhanden ist, ist diese Vorgehensweise mit der Berechnung vorteilhaft.

Es kann auch vorgesehen sein, dass bei einem Erkennen, dass eine mit der Erfassungseinheit erfasste Landmarke kein Pendant in der globalen Karte hat, eine globale Position dieser neuen Landmarke abhängig von einer berechneten, globalen Position des Fahrzeugs, welches die Landmarken mit der Erfassungseinheit erfasst, berechnet wird. In einer vorteilhaften Ausführung wird dann, wenn eine neue Landmarke erfasst wurde, die bisher nicht vorhanden war, die globale Position des erfassenden Fahrzeugs berechnet. Diese wird insbesondere abhängig von relativen Positionen von anderen Landmarken, die bei dem Erfassungsvorgang mit der Erfassungseinheit des Fahrzeugs erfasst wurden, berechnet. Die globale Position der neuen, erfassten Landmarke wird vorzugsweise abhängig von dieser berechneten globalen Position des Fahrzeugs bestimmt. Insbesondere ist diese berechnete globale Position des Fahrzeugs eine Aktualisierungs-Hypothese. Insbesondere wird bei dieser Vorgehensweise und bei dieser Berechnung auch zumindest eine weitere, in der Vergangenheit mit der Erfassungseinheit des Fahrzeugs erfasste Landmarke berücksichtigt. Insbesondere wird dabei eine Positionsabweichung und somit ein Fehlerterm dieser in der Vergangenheit erfassten zumindest einen Landmarke berücksichtigt. Da dieser Fehler einer in der Vergangenheit erfassten, zumindest einen Landmarke bekannt ist, ist auch bekannt, dass die berechnete globale Position des Fahrzeugs diesen Fehler hat. Es ist somit auch diesbezüglich der Fehlerterm für diese globale Position des Fahrzeugs bekannt.

In einem weiteren Ausführungsbeispiel kann auch vorgesehen sein, dass eine erfasste Landmarke, die auch bereits in der Vergangenheit vorhanden war und somit auch eine globale Position in der globalen Karte aufweist, für die Analyse beziehungsweise Bewertung berücksichtigt bleibt. Es wird bei diesem Ausführungsbeispiel somit nicht, wie bei dem oben genannten Ausführungsbeispiel, diese Prüf-Landmarke für die Beurteilung herausgenommen.

In einer vorteilhaften Ausführung wird die Art einer Positionsabweichung analysiert. Abhängig von der erkannten Art einer Positionsabweichung wird die Fehlerstatistik bestimmt beziehungsweise erstellt. Wie bereits oben erläutert, kann somit der Skalierungsgrad und somit die Analysetiefe bezüglich der Fehlererkennung und somit auch bezüglich der Beurteilung, ob eine Aktualisierungs-Hypothese tauglich ist oder nicht, erhöht werden.

Insbesondere werden bei dieser Analyse die Orientierung der Positionsabweichung und/oder der Abstand der Erfassungseinheit von der Landmarke berücksichtigt. So ist es beispielsweise möglich, dass dann, wenn die Erfassungseinheit, insbesondere die Kamera, in eine spezifische Orientierung gerichtet ist, beispielsweise zu weit links orientiert ist, erkannt werden kann, dass jegliche Messung diesbezüglich einen entsprechenden Versatz aufweist und somit diesbezüglich zu weit links gemessen werden würde. Diese Art der Positionsabweichung kann dann erkannt und analysiert und bei der Beurteilung berücksichtigt werden. Ebenso kann dies im Hinblick auf den bereits oben genannten Abstand erfolgen.

Es kann auch vorgesehen sein, dass dann, wenn eine Positionsabweichung für eine Landmarke bestimmt wurde und somit ein Fehlerterm für eine Abweichung einer errechneten globalen Position zu einer globalen Karte vorhandenen Position bestimmt wird, dieser Fehlerterm abgespeichert wird.

Grundsätzlich ist das vorgeschlagene Verfahren und somit der Bewertungsprozess auch dahingehend durchgeführt, dass während des Fortbewegens des Fahrzeugs insbesondere in zumindest diskreten Zeitabständen, insbesondere kontinuierlich, ein Erfassen der Umgebung mit der zumindest einen Erfassungseinheit des Fahrzeugs durchgeführt wird. Es werden somit zeitlich aufeinanderfolgend immer eine oder mehrere Landmarken erfasst. Gemäß den oben genannten Szenarien werden somit in bestimmten Zeitintervallen und somit zu spezifischen aufeinanderfolgenden Zeitpunkten immer wieder individuelle Aktualisierungs-Hypothesen erstellt. Es wird dann jeweils ein Beurteilen von zumindest einer oder mehrerer dieser Aktualisierungs-Hypothesen durchgeführt. Damit ist es auch ermöglicht, dass eine zeitlich nachfolgende Aktualisierungs-Hypothese unter Berücksichtigung von zeitlich vorher erstellten Aktualisierungs-Hypothesen beurteilt wird. Weist eine zeitlich vorhergehende Aktualisierungs-Hypothese eine spezifische Fehlerbeurteilung auf und somit einen individuellen Fehlerterm, so kann dieser Fehlerterm bei einer nachfolgend zu beurteilenden Aktualisierungs-Hypothese berücksichtigt werden.

Insbesondere ist es dadurch möglich, mehrere Fehlerterme zeitlich fortlaufend zu erstellen. Zumindest einige dieser Fehlerterme können dann bei der Erstellung der Fehlerstatistik berücksichtigt werden. Insbesondere kann dann bei diesem Auswerten der Fehlerstatistik ein mittlerer Fehlerterm bestimmt werden. Dieser kann dann, wie bereits oben dargelegt, mit einem insbesondere festgelegten, mittleren Fehler verglichen werden.

Insbesondere dann, wenn alle Fehlerterme den gleichen oder sehr ähnlichen Wert aufweisen, kann darauf geschlossen werden, dass die Erfassungseinheit des Fahrzeugs einen Fehler aufweist. Insbesondere kann die digitale Karte dann hergenommen werden. Es kann diesbezüglich eine Verwendung dahingehend erfolgen, dass der bekannte Fehler der Erfassungseinheit bei der Bestimmung der Eigenlokalisierung mittels der digitalen Karte berücksichtigt wird. Zusätzlich oder stattdessen kann vorgesehen sein, dass die digitale Karte nicht mit diesen Aktualisierungs-Hypothesen aktualisiert wird. Sie kann mit diesbezüglich korrigierten Aktualisierungs-Hypothesen aktualisiert werden. Wurde die digitale Karte bereits mit den fehlerhaften Aktualisierungs-Hypothesen aktualisiert, kann sie in einer vorteilhaften Ausführung diesbezüglich korrigiert werden.

Insbesondere dann, wenn das gesamte Bewertungsszenario und somit der vollständige Bewertungsprozess nur in dem Fahrzeug, welches die Erfassungseinheit aufweist, durchgeführt wird und somit kein Backend verwendet wird, kann in einer ersten Schicht der digitalen Karte ein Abspeichern der erzeugten Aktualisierungs-Hypothesen durchgeführt werden. Damit kann eine Schicht erzeugt werden, die mit einem gewissen Unsicherheitswert versehen ist, wobei sich dies auf den Aktualisierungsgrad beziehungsweise die Tauglichkeit der Verwendung der Aktualisierung bezieht. In einer ersten Schicht dieser digitalen Karte wird systematisch davon ausgegangen, dass diese Karte in Ordnung ist. Eine Eintragung einer neuen Landmarke in die oben genannte zweite Kartenschicht wird mit entsprechender Unsicherheit durchgeführt. Weist diese Landmarke und somit die zugehörige Aktualisierungs-Hypothese eine zu große Unsicherheit auf, wird sie verschoben und in der digitalen Karte nicht benutzt.

Insbesondere wird bei der Erstellung der Fehlerstatistik auch ein Vergleich der Fehlerterme durchgeführt. Weisen diese Fehlerterme alle oder im Wesentlichen alle den gleichen Fehler auf, kann auf einen systematischen Fehler der Erfassungseinheit geschlossen werden. Insbesondere dann, wenn unterschiedliche Fehler auftreten und diese unterschiedlichen Fehler der Fehlerterme gleich dem gemittelten, vorgegebenen Fehler sind, ist das System tauglich und die digitale Karte im aktualisieren Zustand oder im noch zu aktualisierenden Zustand für die Eigenlokalisierungsbestimmung des Fahrzeugs verwendbar.

Ein weiterer Aspekt der Erfindung betrifft ein Verfahren zur Eigenlokalisierung eines Fahrzeugs. Die globale Position des Fahrzeugs wird abhängig von einer digitalen Karte bestimmt. Die Verwendung der digitalen Karte für diese Eigenlokalisierungsbestimmung wird abhängig von einem Verfahren gemäß dem oben genannten Aspekt oder einer vorteilhaften Ausgestaltung davon bewertet.

Ein weiterer Aspekt der Erfindung betrifft ein elektronisches Bewertungssystem zum Bewerten einer digitalen Karte, insbesondere bezüglich ihrer Verwendung für eine Eigenlokalisierung eines Fahrzeugs. Das Bewertungssystem weist zumindest eine Erfassungseinheit des Fahrzeugs auf. Das Bewertungssystem weist darüber hinaus zumindest eine Auswerteeinheit auf. Das Bewertungssystem ist zum Durchführen eines Verfahrens gemäß dem oben genannten Aspekt oder einer vorteilhaften Ausführung davon ausgebildet. Insbesondere wird das Verfahren mit dem Bewertungssystem durchgeführt. Insbesondere ist das Bewertungssystem zum Bewerten von Aktualisierungs-Hypothesen für eine digitale Karte ausgebildet. Es wird insbesondere auch ein Verfahren zum Bewerten von zumindest einer Aktualisierungs-Hypothese für eine digitale Karte bereitgestellt.

Auch bei dem Ausführungsbeispiel, bei welchem die Aktualisierungsdaten und somit die Aktualisierungs-Hypothesen vom Fahrzeug an ein Backend übertragen werden, werden diese Aktualisierungs-Hypothesen auch fahrzeugintern bewertet.

Der allgemeine Vorteil der Durchführung des Bewertungsprozesses durch das Fahrzeug liegt auch darin, dass das Backend diese Bewertungsergebnisse beim Abgleich mit Flottendaten berücksichtigen oder schon direkt verwerfen kann, falls diese Aktualisierungsdaten und somit diese Aktualisierungs-Hypothesen außerhalb der Fehlertoleranzen liegen.

Der Begriff der Hypothese beschreibt im Kontext der Anmeldung eine möglicherweise notwendige Aktualisierung der digitalen Karte. Diese kann beispielsweise das Verändern der Position einer Landmarke, das Hinzufügen einer bisher unbekannten Landmarke sowie das Löschen einer nicht mehr vorhandenen Landmarke sein. Mit dem vorgeschlagenen Verfahren ist es nunmehr möglich, dass eine Landmarke einerseits bereits bestmöglich bestimmt wird und nunmehr zusätzlich weiter überprüft wird, ob sie auch wirklich direkt und genau genug bestimmt wird. Bei bisherigen Verfahren kann zwar eine Position der Landmarke bestimmt werden, da jedoch keine weitere Überprüfung durchgeführt wird, kann nicht darauf geschlossen werden, ob systematische Messfehler dieses Ergebnis verfälscht haben. Genau dies wird durch die Erfindung nun ermöglicht. Durch das vorgeschlagene Verfahren, bei welchem mittels der Fehlerstatistik auch ein Rückschluss auf die Funktionsweise des Systems erfolgen kann, da diese Abweichungen nochmals detaillierter beurteilt werden, kann die Tauglichkeitsanalyse einer digitalen Karte verbessert werden, da ein mehrstufiger Prozess durchgeführt wird. Insbesondere ist es vorteilhaft, dass für diese Erstellung der Fehlerstatistik nicht nur eine Aktualisierungs-Hypothese, sondern mehrere Aktualisierungs-Hypothesen berücksichtigt werden. Da sich daraus mehrere Fehlerterme ergeben, kann die Fehlerstatistik mit einem genaueren Aussagegehalt bereitgestellt werden. Insbesondere werden zumindest zwei, insbesondere zumindest fünf, insbesondere zumindest zehn, derartige Fehlerterme berücksichtigt.

Bei dem oben geschilderten Verfahren ist vorzugsweise auch vorgesehen, dass dann, wenn bei der Auswertung der Fehlerstatistik ermittelt wird, dass das System und somit die mehreren Aktualisierungs-Hypothesen im Durchschnitt eine Abweichung von einem Wert x haben und somit ein gemittelter Fehlerterm x für die Positionen von Landmarken besteht, eine neu detektierte weitere Landmarke und zunächst eine bestmögliche Position dieser neuen Landmarke aufgrund der aktuellen Messdaten und somit der bisherigen Fehlerterme bestimmt wird. Tritt dabei ein Fehlerterm auf, der größer als x ist, so wird die Aktualisierungs-Hypothese verworfen. Trotz dem, dass die Position dieser neuen Landmarke bestmöglich geschätzt wurde, liegt dann mit entsprechender Wahrscheinlichkeit eine fehlerhafte Kalibrierung der Erfassungseinheit oder ein anderer Fehler vor. Ist andererseits der Fehlerterm dieser neuen erfassten Landmarke kleiner als x, so wird die Aktualisierungs-Hypothese zu dieser neuen Landmarke angenommen. Beim nächsten Vorbeifahren des Fahrzeugs an dieser erfassten neuen Landmarke wird diese als globale Landmarke dann betrachtet und mit einem Fehlerterm von x genutzt.

Allgemein wird somit einer erfassten Landmarke eine Aktualisierungs-Hypothese mit einem individuellen Fehlerterm zugeschrieben beziehungsweise diese damit charakterisiert. Insbesondere wird der gemittelte Fehler vorgegeben. Dieser gemittelte Fehler x kann individuell vorgegeben werden. Er kann auch individuell verändert werden. Beispielsweise kann auch eine dynamische Änderung vorgesehen sein.

Dieser gemittelte Fehler kann abhängig vom Fahrzeug und/oder der Erfassungseinheit sein. Er kann zusätzlich oder stattdessen auch abhängig von dem Verkehrsweg, auf welchem sich das Fahrzeug befindet, sein. Beispielsweise kann der gemittelte Fehler in dem Zusammenhang auf Autobahnen anders sein als auf Landstraßen oder kleinen anderweitigen Verkehrswegen.

Grundsätzlich kann eine Landmarke ein spezifisches Objekt in der Umgebung des Fahrzeugs sein. Es können ortsfeste Objekte sein. Beispielsweise kann dies ein Verkehrsleitelement, wie beispielsweise eine Ampel, ein Verkehrszeichen oder dergleichen sein. Eine Landmarke kann jedoch auch beispielsweise ein spezifisches Gebäude oder ein spezifischer Baum sein. Landmarken können auch nicht-ortsfeste Objekte sein. Beispielsweise kann dies ein bewegbares Verkehrszeichen oder dergleichen sein.

Vorzugsweise werden Landmarken in zumindest zwei verschiedene Klassen eingeteilt. Diese Klassen können vorgegeben sein. Beispielsweise kann eine Klasse eine Spezifikation einer Landmarke in der Umgebung sein. Zusätzlich oder stattdessen kann eine Klassifikation auch abhängig von der Tageszeit sein. Beispielsweise kann hier eine Unterscheidung zwischen Nacht und Tag erfolgen. Beispielsweise kann diese Klassifikation beinhalten, dass eine Schätzung einer Landmarke und somit eine Positionsbeurteilung bei Tageslicht der Erfassungseinheit besser möglich ist, als in der Nacht. Damit können Fehlerterme auch abhängig von der Klassifizierung einer Landmarke gewichtet werden. Dies ist ein weiterer Vorteil, um die Genauigkeit der Analyse und somit des Bewertungsprozesses zu verbessern.

Insbesondere kann auch vorgesehen sein, dass anhand des Bewertungsprozesses ein Gütemaß für das System bestimmt wird. Somit wird für die mehreren Aktualisierungs-Hypothesen ein derartiges Gütemaß bestimmt. Dieses Gütemaß kann in einer vorteilhaften Ausführung auch der digitalen Karte zugeordnet werden. Ebenso kann in dem Zusammenhang ein Gütemaß der oben genannten Klassifikation durchgeführt werden. Somit kann auch dieser jeweiligen Klasseneinteilung ein Gütemaß zugeordnet werden.

Bei dem Erfassen einer Landmarke mit der Erfassungseinheit kann diese Landmarke beim Vorbeifahren des Fahrzeugs auch mehrfach detektiert werden und dies beispielsweise auch aus verschiedenen Perspektiven erfolgen. Insbesondere werden diese erfassten Landmarken in einem Fahrzeug-Koordinatensystem eingetragen, sodass sich die oben genannten relativen Positionen ergeben. Diese erfassten Landmarken werden vorzugsweise mithilfe eines Schätzverfahrens, beispielsweise eines Graphen-basierten Optimierungssystems aus dem vorzugsweise SLAM-Algorithmus, miteinander verrechnet.

Es können einzelne Messungen einer Landmarke und somit einzelne Erfassungen dieser Landmarke beispielsweise abhängig von der Perspektive und/oder der Distanz beziehungsweise dem Abstand der Erfassungseinheit unterschiedlich gewichtet werden. Es können in dem Zusammenhang auch die Odometrie oder eine GNSS-Information und/oder andere Sensorinformationen einbezogen werden, um die Position des Fahrzeugs zu bestimmen. Insbesondere wird hier die globale Position des Fahrzeugs bestimmt.

Durch das Verfahren wird erreicht, dass eine fehlerhafte globale Position einer Landmarke, die insbesondere in der digitalen Karte eingetragen wird, dazu führen kann, dass bei der nächsten Vorbeifahrt des Fahrzeugs an dieser Landmarke die Relativ-Messung mit der Erfassungseinheit nicht mehr zu dem passt, was aus der globalen Karte erwartet wird. Dies kann dazu führen, dass die globale Position des Fahrzeugs falsch geschätzt wird und somit die Eigenlokalisation falsch geschätzt wird. Wenn diese Eigenlokalisierung des Fahrzeugs falsch geschätzt wird, werden dann wiederum alle neuen Landmarken ebenfalls global falsch positioniert. Dadurch beginnt ein Kreislauf, der durch das vorgeschlagene Verfahren oder eine vorteilhafte Ausgestaltung davon eben genau unterbrochen wird. Dies erfolgt dahingehend, dass das System, insbesondere ständig, eine Eigendiagnose durchführt. Das System bewertet also seine eigenen Aktualisierungs-Hypothesen nochmals intern. Es wird also ein zumindest zweistufiger Überprüfungsprozess durchgeführt. Bestimmte Aktualisierungs-Hypothesen werden nicht als zutreffend hingenommen, sondern nochmals intern durch ein spezifisches Verfahren, wie es erläutert wurde, bewertet. Dies verhindert letztlich, dass falsche globale Positionen von Landmarken in die digitale Karte eingetragen werden oder dauerhaft darin stehenbleiben und ohne die Kenntnis der Fehlerhaftigkeit genutzt werden.

Es wird insbesondere ermöglicht, dass bei einem Ausführungsbeispiel mithilfe der in der digitalen Karte eingetragenen Landmarken während der Fahrt des Fahrzeugs kontinuierlich oder zyklisch nach festgelegten Zeitintervallen oder Wertintervallen geschätzt wird, mit welcher Genauigkeit die Positionsbestimmung einer Landmarke aktuell erfolgt. Es wird insbesondere dabei ermittelt, inwieweit die geschätzte Position einer Landmarke von ihrer in der Karte eingetragenen globalen Position abweicht. Vorzugsweise werden die hier verwendeten Landmarken aus der digitalen Karte so ausgewählt, dass sie gut detektierbar sind und dass ihre Position mit einer hohen Genauigkeit bekannt ist. Wird eine neue, nicht in der digitalen Karte enthaltene Landmarke erfasst, so kann für die Schätzung der Genauigkeit ihrer Position die Genauigkeit von Vergleichslandmarken in ihrer Umgebung dienen, wie dies bereits oben erläutert wurde. Diese Information kann für die Generierung von Aktualisierungs-Hypothesen für Landmarken genutzt werden.

Die Gründe für Fehler bei der Bestimmung der Position einer Landmarke können beispielsweise eine fehlerhafte Sensorkalibrierung, ein Sensorausfall, ein fehlerhaftes

Durchführen eines Kartenabgleichs und generelle Systemfehler sein. Der Sensor ist hierbei die Erfassungseinheit des Fahrzeugs.

Vorrangig ist es hierbei nicht zu versuchen, einen Rückschluss auf die jeweilige konkrete Ursache des Fehlers herzustellen, da die Fehlerbilder typischerweise von der verwendeten Sensorik beziehungsweise der Erfassungseinheit abhängen. Stattdessen behandelt die Erfindung vorrangig ein System, welches unabhängig von der verwendeten Erfassungseinheit in der Lage ist, Fehler bei der Generierung von Aktualisierungs-Hypothesen zu schätzen. Anschließend kann eine detaillierte Diagnose durchgeführt werden.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
- Fig. 1: eine vereinfachte Darstellung einer Verkehrsszenerie mit einem Fahrzeug und Landmarken; und
- Fig. 2: eine schematische Darstellung von Ablaufdiagrammen von Verfahren gemäß Ausführungsbeispielen der Erfindung.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

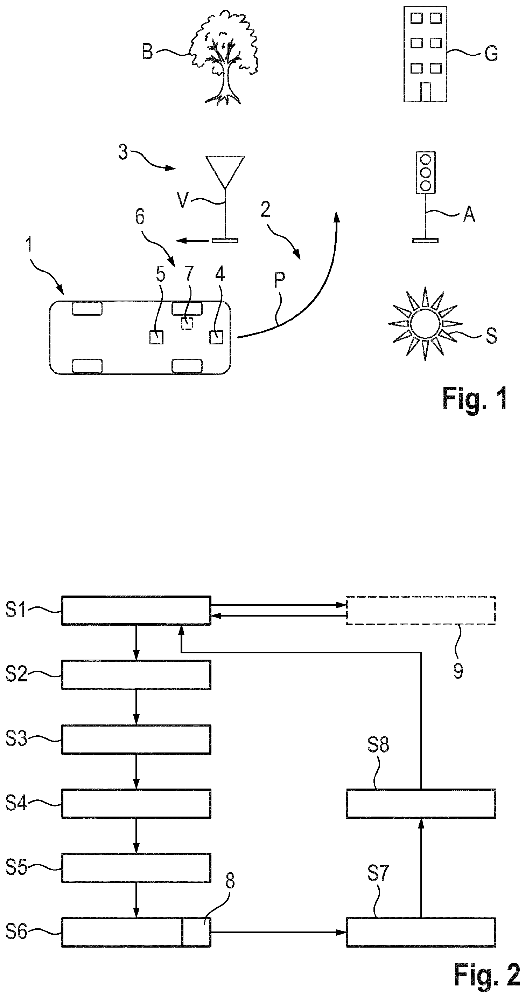

In Fig. 1 ist in einer schematischen vereinfachten Darstellung ein Fahrzeug 1 gezeigt. Das Fahrzeug 1 kann ein Kraftfahrzeug, wie beispielsweise ein Personenkraftwagen oder ein Lastkraftwagen, sein. Das Fahrzeug 1 fährt in Richtung eines Pfeils P einen Verkehrsweg 2. Der Verkehrsweg 2 kann beispielsweise eine öffentliche Straße wie beispielsweise eine Staatsstraße oder eine Bundesstraße oder eine Autobahn sein. Der Verkehrsweg 2 kann Überland oder in einer Ortschaft sein. Die Beispiele für einen Verkehrsweg 2 und dessen Verlauf sind keinesfalls abschließend zu verstehen, sondern lediglich beispielhaft zu verstehen. In der Umgebung 3 des Fahrzeugs 1 sind mehrere Objekte angeordnet. Diese sind insbesondere Landmarken. Beispielsweise ist dies eine Straßenlaterne S, eine Ampel A, ein Gebäude G, ein Baum B und ein Verkehrsschild V. Beispielsweise kann das Verkehrsschild V ein mobiles beziehungsweise bewegbares Verkehrsschild sein. Insbesondere sind die anderen hier genannten Landmarken ortsfest in der Umgebung 3 angeordnet. Sowohl die Art als auch die Anzahl als auch die Position der beispielhaften genannten Landmarken sind nicht abschließend zu verstehen. Auch deren Ortsfestheit oder deren Mobilität ist lediglich beispielhaft zu verstehen.

Das Fahrzeug 1 weist zumindest eine Erfassungseinheit 4 auf. Dies kann beispielsweise eine Kamera sein. Die Erfassungseinheit 4 ist so angeordnet, dass sie die Umgebung 3 des Fahrzeugs 1 erfassen kann. Darüber hinaus ist vorgesehen, dass das Fahrzeug 1 eine Auswerteeinheit 5 aufweist. Im gezeigten Ausführungsbeispiel sind die Erfassungseinheit 4 und die Auswerteeinheit 5 Bestandteil eines Bewertungssystems 6. Das elektronische Bewertungssystem 6 ist auch zum Bewerten einer digitalen Karte 7 ausgebildet. Die digitale Karte 7 ist in Fig. 1 beispielhaft im Fahrzeug 1 abgelegt gezeigt. Sie kann jedoch auch extern zum Fahrzeug 1 abgelegt sein. Sie kann dann entsprechend für das Fahrzeug 1 zur Verfügung gestellt sein. Das Bewertungssystem 6 ist zum Bewerten der digitalen Karte 7 insbesondere bezüglich ihrer Verwendung für eine Eigenlokalisierung des Fahrzeugs 1 ausgebildet. Insbesondere ist das Bewertungssystem 6 zum Bewerten von Aktualisierungs-Hypothesen für diese digitale Karte 7, insbesondere bezüglich der Verwendung dieser Aktualisierungs-Hypothesen, für eine Eigenlokalisierung des Fahrzeugs 1 ausgebildet. Insbesondere wird dieses jeweilige entsprechende Verfahren mit diesem Bewertungssystem 6 durchgeführt.

In Fig. 2 ist in einer schematischen Darstellung ein Ablaufdiagramm für ein Ausführungsbeispiel eines Verfahrens gezeigt. Es wird zunächst mit der zumindest einen Erfassungseinheit 4 während der Fortbewegungsfahrt des Fahrzeugs 1 die Umgebung 3 des Fahrzeugs 1 erfasst. Dabei werden zumindest einige Landmarken S, A, G, B und V mit der Erfassungseinheit 4 gleichzeitig oder in spezifischen Zeitpunkten nacheinander erfasst. Es wird eine relative Karte der Umgebung 3 auf Basis der erfassten Informationen erstellt. Insbesondere läuft in dem Zusammenhang gemäß einem Schritt S1 vorzugsweise ein Graphen-basiertes Lokalisierungs- und Kartierungssystem. In dieser relativen Karte werden relative Positionen von erfassten Landmarken S, A, G, B, V eingetragen.

Es wird dann ein Bereitstellen einer globalen digitalen Karte 7 der Umgebung 3 mit globalen Positionen von Landmarken durchgeführt. Die globalen Positionen können die Positionen der Landmarken S, A, G, B, V sein.

Es kann in dem Zusammenhang der Fall sein, dass zumindest eine der Landmarken bisher nicht vorhanden war und somit eine neue Landmarke darstellt. Beispielsweise kann dies das Verkehrsschild V sein, welches erst neu aufgestellt wurde. Ebenso ist es in einem weiteren Ausführungsbeispiel möglich, dass alle erfassten Landmarken auch vorher schon da waren, also insbesondere auch bei der letzten Vorbeifahrt des Fahrzeugs 1, und keine neuen Landmarken sind. Diese weisen dann allesamt globale Positionen auf, die in der globalen digitalen Karte 7 vorhanden sind. Auch kann in einem weiteren Ausführungsbeispiel vorgesehen sein, dass alle erfassten Landmarken bereits vorher vorhanden waren, jedoch beispielsweise eine der Landmarken zwischenzeitlich ihre Position geändert hat. Beispielsweise kann dies bei einem Verkehrsschild V der Fall sein, welches mobil ist und somit seine Position ändern kann.

In einem weiteren Schritt kann dann ein Erzeugen von mehreren Aktualisierungs-Hypothesen für die digitale Karte auf Basis von Positionsinformationen von Landmarken in der relativen Karte und/oder auf Basis von Positionsinformationen von Landmarken in der globalen Karte durchgeführt werden, wenn eine Positionsabweichung für eine Landmarke zu einer globalen Position zumindest eines Referenzobjekts auftritt. Es wird also bei dem Algorithmus nach Positionsabweichungen der globalen Position von erfassten und/oder neu hinzugekommenen Landmarken und/oder örtlich sich verändernden Landmarken gesucht beziehungsweise diese Positionsabweichungen werden bestimmt. Insbesondere dann, wenn eine derartige Positionsabweichung für eine erfasste Landmarke aufgetreten ist, wird zunächst diesbezüglich eine Aktualisierungs-Hypothese angenommen. Dies bedeutet, dass auf Basis dieser Beurteilung das System zu dem vorläufigen Ergebnis gekommen ist, dass die digitale Karte auf Basis der Aktualisierungs-Hypothese aktualisiert werden sollte.

Dieses vorläufige Ergebnis wird bei dem vorgeschlagenen Verfahren dann nochmals zusätzlich überprüft. Das oben genannte Referenzobjekt kann beispielsweise eine Landmarke oder das Fahrzeug 1 sein.

Bei dem Verfahren wird dann auf Basis der angenommenen Aktualisierungs-Hypothesen eine Fehlerstatistik bestimmt. Dabei werden vorzugsweise mehrere Aktualisierungs-Hypothesen berücksichtigt, die somit in die Bestimmung der Fehlerstatistik einfließen. Diese Fehlerstatistik wird in einem weiteren Schritt ausgewertet. Abhängig von der Auswertung der Fehlerstatistik wird beurteilt, ob zumindest eine Aktualisierungs-Hypothese der digitalen Karte, insbesondere die gesamte digitale Karte, für eine Eigenlokalisierung des Fahrzeugs 1 tauglich ist oder nicht. Dies beinhaltet auch, dass gegebenenfalls ein Tauglichkeitsgrad beurteilt wird. Es kann somit nicht nur digital zwischen einer vollständigen Tauglichkeit oder einer vollständigen Nichttauglichkeit unterschieden werden. Vielmehr kann in einer vorteilhaften Ausführung auch ein gewisser Grad der Tauglichkeit bestimmt werden. Dieser kann somit auch ein Prozentwert zwischen 0 Prozent und 100 Prozent sein.

Bei dem Ausführungsbeispiel gemäß Fig. 2 wird in einer vorteilhaften Ausführung folgend auf den Schritt S1 eine zufällige Auswahl einer Landmarke im Sichtbereich des Fahrzeugs 1 gemäß einem Schritt S2 durchgeführt. Für eine Erzeugung einer Aktualisierungs-Hypothese wird somit eine mit der Erfassungseinheit 4 erfasste Landmarke S, A, G, B, V mit deren relativer Position nach einem Zufallsprinzip von dem Bewertungssystem 6 ausgewählt. Die globale Position dieser zufällig ausgewählten Landmarke wird dann bewertet.

In einem vorteilhaften Ausführungsbeispiel wird gemäß einem Schritt S3 diese als Prüf-Landmarke bezeichnete Landmarke temporär aus der digitalen Karte entfernt. Die zugehörige globale Position dieser Prüf-Landmarke wird als Referenzposition gespeichert. In einem weiteren Schritt S4 wird die globale Position dieser zufällig ausgewählten Landmarke, die als Prüf-Landmarke bezeichnet wird, auf Basis von erfassten relativen Positionen von anderen mit der Erfassungseinheit 4 erfassten Landmarken neu berechnet. Dies erfolgt ebenfalls durch das Bewertungssystem 6.

In einem weiteren Schritt S5 im gezeigten Ausführungsbeispiel wird dann ein Fehlerterm zwischen der geschätzten beziehungsweise berechneten globalen Position dieser temporär entfernten Landmarke und der abgespeicherten Referenzposition, die auch eine globale Position ist, dieser spezifischen Landmarke bestimmt. Dieser Fehlerterm wird der Fehlerstatistik bereitgestellt. Insbesondere erfolgt dies für mehrere Landmarken. Diese Fehlerterme werden gemäß einem Schritt S6 in einer Datenbank 8 abgespeichert. Die Datenbank 8 kann vorzugsweise im Fahrzeug 1 angeordnet sein.

Gemäß einem Schritt S7 werden die Fehlerterme, die die Fehlerstatistik bilden, ausgewertet. Insbesondere wird dabei aufgrund aller bisher geschätzten beziehungsweise berechneten Fehlerterme eine statistische Auswertung durchgeführt. Dabei wird in einer vorteilhaften Ausführung gemäß einem Schritt S8 ein vorgegebener, gemittelter Fehler für das gesamte System mit einem gemittelten Fehlerterm verglichen. Diese Fehlerterme, die der Fehlerstatistik zugrundegelegt werden, charakterisieren Positionsabweichungen. Diese Fehlerterme werden gemittelt beispielsweise arithmetisch, wodurch sich der gemittelte Fehlerterm ergibt. Abhängig von dem Vergleich zwischen dem gemittelten Fehler des gesamten Systems mit dem bestimmten gemittelten Fehlerterm wird beurteil, ob zumindest eine Aktualisierungs-Hypothese der digitalen Karte, insbesondere die gesamte digitale Karte, für eine Eigenlokalisierung des Fahrzeugs 1 tauglich ist oder nicht und/oder mit welchem Grad sie tauglich ist. Ist der gemittelte Fehlerterm größer als der gemittelte Fehler, so wird in einem Szenario die Aktualisierungs-Hypothese als nicht tauglich für die digitale Karte und somit als nicht tauglich für die Eigenlokalisierung des Fahrzeugs 1 auf Basis der digitalen Karte bewertet. Ist der gemittelte Fehlerterm kleiner oder gleich diesem gemittelten Fehler, so kann die grundsätzliche Tauglichkeit dieser Aktualisierungs-Hypothese bewertet werden. Dieser gesamte Bewertungsprozess wird vorzugsweise vollständig im Fahrzeug 1 selbst durchgeführt.

In einer Alternative kann vorgesehen sein, dass nach dem Schritt S8 das Bewertungsergebnis über eine Aktualisierungs-Hypothese einem fahrzeugexternen Backend 9 übermittelt wird. In diesem Backend 9 wird dieses Bewertungsergebnis berücksichtigt. Zusätzlich werden darüber hinaus auch noch Bewertungsergebnisse von zumindest einem weiteren Fahrzeug einer Fahrzeugflotte berücksichtigt. Es wird dann ein End-Bewertungsergebnis bestimmt.

Zu Fig. 2 wurde beispielhaft das Szenario erläutert, bei welchem eine zufällig ausgewählte Prüf-Landmarke bereits vorher vorhanden war und in der digitalen Karte mit einer globalen Position vorhanden ist.

In einem weiteren Szenario ist es auch möglich, dass diese Landmarke, welche zufällig ausgewählt wurde und welche vorher bereits vorhanden war, bei der Berechnung der globalen Position dieser ausgewählten Landmarke nicht temporär unberücksichtigt bleibt, sondern auch dann berücksichtigt bleibt.

Möglich ist es in einem weiteren Szenario auch, dass eine zufällig ausgewählte Landmarke neu ist und vorher nicht vorhanden war. Dies bedeutet, dass sie noch keine globale Position in der globalen digitalen Karte aufweist. In einem derartigen Szenario kann vorgesehen sein, dass andere erfasste Landmarken mit ihren relativen Positionen berücksichtigt werden, um eine globale Position des Fahrzeugs 1 zu berechnen. Die globale Position dieser neuen Landmarke wird dann abhängig von der berechneten, globalen Position des Fahrzeugs 1 bestimmt.

Darüber hinaus sind auch Szenarien bewertbar, bei welchen eine früher vorhandene Landmarke im aktuellen Erfassungsvorgang nicht mehr vorhanden ist oder nicht detektiert werden kann.

Insbesondere wird bei allen möglichen Szenarien die Fehlerstatistik dahingehend ausgewertet, ob die Positionsabweichungen auf einem Fehler der Erfassungseinheit 4 beruhen. Die Verwendung zumindest der Aktualisierungs-Hypothesen, insbesondere die Verwendung der digitalen Karte 7, für die Eigenlokalisierung des Fahrzeugs 1 wird bejaht, wenn diese Positionsabweichungen auf einem Fehler der Erfassungseinheit beruhen. Dies wird insbesondere dadurch erkannt, dass alle Fehlerterme einen gleichen Fehler aufweisen. Es ist dann erkennbar, dass der Fehler bei der Erfassungseinheit liegt. Der bekannte Fehler wird dann jeweils bei der Eigenlokalisierung berücksichtigt.

Vorzugsweise wird vor dem Erzeugen von Aktualisierungs-Hypothesen ein Kartenabgleich zwischen der globalen Karte und der relativen Karte durchgeführt. Insbesondere wird auf Basis dieses Kartenabgleichs eine aktuelle globale Position des Fahrzeugs 1 bestimmt.

In einer weiteren vorteilhaften Ausführung wird die Art einer Positionsabweichung analysiert und abhängig davon die Fehlerstatistik bestimmt. Insbesondere wird bei dieser Analyse die Orientierung der Positionsabweichung und/oder der Abstand der Erfassungseinheit 4 von der Landmarke S, A, G, B, V berücksichtigt.

### Bezugszeichenliste

- 1: Fahrzeug
- 2: Verkehrsweg
- 3: Umgebung
- 4: Erfassungseinheit
- 5: Auswerteeinheit
- 6: Bewertungssystem
- 7: digitale Karte
- 8: Datenbank
- 9: Backend
- A: Ampel
- B: Baum
- G: Gebäude
- P: Pfeil
- S: Straßenlaterne
- V: Verkehrsschild
- S1: Schritt
- S2: Schritt
- S3: Schritt
- S4: Schritt
- S5: Schritt
- S6: Schritt
- S7: Schritt
- S8: Schritt

## Patentansprüche

1. Verfahren zum Bewerten einer digitalen Karte (7), bei welchem folgende Schritte durchgeführt werden:
- Erfassen der Umgebung (3) eines Fahrzeugs (1) mit zumindest einer Erfassungseinheit (4) des Fahrzeugs (1);
- Erstellen einer relativen Karte der Umgebung auf Basis der erfassten Informationen mit relativen Positionen von erfassten Landmarken (A, B, G, S, V) in der Umgebung (3);
- Bereitstellen einer globalen Karte der Umgebung (3) mit globalen Positionen von Landmarken (A, B, G, S, V);
- Erzeugen von mehreren Aktualisierungs-Hypothesen für die digitale Karte (7) auf Basis von Positionsinformationen von Landmarken (A, B, G, S, V) in der relativen Karte und/oder auf Basis von Positionsinformationen von Landmarken (A, B, G, S, V) in der globalen Karte, wobei eine Aktualisierungs-Hypothese dann erzeugt wird, wenn eine Positionsabweichung für eine Landmarke (A, B, G, S, V) zu einer globalen Position zumindest eines Referenzobjekts (A, B, G, S, V, 1) auftritt,
- Bestimmen einer Fehlerstatistik für zumindest einige der Positionsabweichungen;
- Auswerten der Fehlerstatistik; und
- Abhängig von der Auswertung der Fehlerstatistik beurteilen, ob zumindest eine Aktualisierungs-Hypothese der digitalen Karte (7), insbesondere die gesamte digitale Karte (7), für eine Eigenlokalisierung des Fahrzeugs (1) tauglich ist,
**dadurch gekennzeichnet, dass**
für ein Erzeugen einer Aktualisierungs-Hypothese eine mit der Erfassungseinheit (4) erfasste Landmarke (A, B, G, S, V) mit deren relativer Position nach einem Zufallsprinzip ausgewählt wird, wobei die globale Position dieser zufällig ausgewählten Landmarke (A, B, G, S, V) bewertet wird und
bei dieser Bewertung die relative Position dieser ausgewählten Landmarke (A, B, G, S, V) unberücksichtigt bleibt, und eine globale Position dieser ausgewählten Landmarke (A, B, G, S, V) abhängig von relativen Positionen anderer Landmarken (A, B, G, S, V), die bei dem und/oder einem Erfassungsvorgang durch die Erfassungseinheit (4) erfasst wurden, berechnet wird, wobei abhängig von dieser berechneten globalen Position ein Fehlerterm bestimmt wird, der der Fehlerstatistik bereitgestellt wird, wobei die berechnete globale Position der ausgewählten Landmarke (A, B, G, S, V) mit der globalen Position dieser Landmarke (A, B, G, S, V) aus der globalen Karte verglichen wird, wobei bei einem Auftreten einer Positionsabweichung zwischen diesen globalen Positionen diese Positionsabweichung als Fehlerterm gebildet wird.

2. Verfahren nach Anspruch 1, wobei
der Bewertungsprozess vollständig im Fahrzeug (1) selbst durchgeführt wird.

3. Verfahren nach einem der vorhergehenden Ansprüche, wobei
ein Bewertungsergebnis des Bewertungsprozesses, welches im Fahrzeug (1) erzeugt wurde, an ein zum Fahrzeug (1) externes Backend (8) übertragen wird, wobei im Backend (8) Bewertungsergebnisse einer Fahrzeugflotte mit mehreren Fahrzeugen abgelegt sind, wobei im Backend (8) das Bewertungsergebnis mit den Bewertungsergebnissen der Fahrzeugflotte verglichen wird und abhängig von dem Vergleich ein End-Bewertungsergebnis erzeugt wird, welches dem Fahrzeug (1) bereitgestellt wird.

4. Verfahren nach einem der vorhergehenden Ansprüche, wobei
bei dem Auswerten der Fehlerstatistik ein gemittelter Fehler für das gesamte System vorgegeben wird, wobei Fehlerterme, die die Positionsabweichungen charakterisieren, gemittelt werden und der gemittelte Fehler mit dem gemittelten Fehlerterm verglichen wird, und abhängig von dem Vergleich beurteilt wird, ob zumindest eine Aktualisierungs-Hypothese der digitalen Karte (7), insbesondere die gesamte digitale Karte (7), für eine Eigenlokalisierung des Fahrzeugs (1) tauglich ist.

5. Verfahren nach einem der vorhergehenden Ansprüche, wobei
vor dem Erzeugen von Aktualisierungs-Hypothesen ein Kartenabgleich zwischen der globalen Karte und der relativen Karte durchgeführt wird, insbesondere um abhängig davon eine globale Position des Fahrzeugs (1) zu bestimmen.

6. Verfahren nach Anspruch 5, wobei
abhängig von dem Kartenabgleich eine Zuordnung zwischen relativen Positionen von Landmarken (A, B, G, S, V) und globalen Positionen von Landmarken (A, B, G, S, V) durchgeführt wird.

7. Verfahren nach einem der vorhergehenden Ansprüche, wobei
bei einem Erkennen, dass eine mit der Erfassungseinheit (4) erfasste Landmarke (A, B, G, S, V) kein Pendant in der globalen Karte hat, eine globale Position dieser neuen Landmarke (A, B, G, S, V) abhängig von relativen Positionen von anderen, mit der Erfassungseinheit (4) erfassten Landmarken (A, B, G, S, V) berechnet wird und/oder abhängig von einer berechneten globalen Position des Fahrzeugs (1) berechnet wird.

8. Verfahren nach einem der vorhergehenden Ansprüche, wobei
die Art einer Positionsabweichung analysiert wird und abhängig davon die Fehlerstatistik bestimmt wird.

9. Verfahren nach Anspruch 8, wobei
bei dieser Analyse die Orientierung der Positionsabweichung und/oder der Abstand der Erfassungseinheit (4) von der Landmarke (A, B, G, S, V) als Arten der Positionsabweichung berücksichtigt wird.

10. Verfahren zur Eigenlokalisierung eines Fahrzeugs (1), bei welchem die globale Position des Fahrzeugs (1) abhängig von einer digitalen Karte (7) bestimmt wird, wobei die Tauglichkeit der Verwendung der digitalen Karte (7) für die Eigenlokalisierung abhängig von einem Verfahren nach einem der Ansprüchen 1 bis 9 bewertet wird.

11. Bewertungssystem (6) zum Bewerten einer digitalen Karte (7), mit einer Erfassungseinheit (4) eines Fahrzeugs (1) und mit einer Auswerteeinheit (5), wobei das Bewertungssystem (6) zum Durchführen eines Verfahrens nach einem der vorhergehenden Ansprüche ausgebildet ist.

## Claims

1. Method for evaluating a digital map (7), wherein the following steps are performed:
- capturing the environment (3) of a vehicle (1) with at least one capture unit (4) of the vehicle (1);
- creating a relative map of the environment based on the captured information, with relative positions of captured landmarks (A, B, G, S, V) in the environment (3);
- providing a global map of the environment (3) with global positions of landmarks (A, B, G, S, V);
- generating multiple update hypotheses for the digital map (7) based on position information of landmarks (A, B, G, S, V) in the relative map and/or based on position information of landmarks (A, B, G, S, V) in the global map, wherein an update hypothesis is generated when a position deviation for a landmark (A, B, G, S, V) to a global position of at least one reference object (A, B, G, S, V, 1) occurs;
- determining an error statistic for at least some of the position deviations;
- evaluating the error statistic; and
- depending on the evaluation of the error statistic judging whether at least one update hypothesis of the digital map (7), particularly the entire digital map (7), is suitable for self-localization of the vehicle (1), thereby **characterized by**
that for generating an update hypothesis a landmark (A, B, G, S, V) captured with the capture unit (4) is selected according to a random principle, wherein the global position of this randomly selected landmark (A, B, G, S, V) is evaluated
and in this evaluation the relative position of this selected landmark (A, B, G, S, V) is disregarded, and a global position of this selected landmark (A, B, G, S, V) is calculated depending on relative positions of other landmarks (A, B, G, S, V) captured in the same and/or a capture operation by the capture unit (4), wherein depending on this calculated global position an error term is determined, which is provided to the error statistic, wherein the calculated global position of the selected landmark (A, B, G, S, V) is compared with the global position of this landmark (A, B, G, S, V) from the global map, wherein in case of a position deviation between these global positions this position deviation is formed as an error term.

2. Method according to claim 1, wherein
the evaluation process is performed entirely within the vehicle (1) itself.

3. Method according to any preceding claim, wherein
an evaluation result of the evaluation process, which was generated in the vehicle (1), is transferred to a backend (8) external to the vehicle (1), wherein in the backend (8) evaluation results of a vehicle fleet with multiple vehicles are stored, wherein in the backend (8) the evaluation result is compared with the evaluation results of the vehicle fleet and, depending on the comparison, a final evaluation result is generated, which is provided to the vehicle (1).

4. Method according to any preceding claim, wherein
when evaluating the error statistics a mean error for the entire system is specified, wherein error terms that characterize the position deviations are averaged and the mean error is compared with the averaged error term, and depending on the comparison it is judged whether at least one update hypothesis of the digital map (7), particularly the entire digital map (7), is suitable for self-localization of the vehicle (1).

5. Method according to any preceding claim, wherein
prior to generating update hypotheses a map alignment between the global map and the relative map is performed, particularly to determine a global position of the vehicle (1) depending on that.

6. Method according to claim 5, wherein
depending on the map alignment a correspondence between relative positions of landmarks (A, B, G, S, V) and global positions of landmarks (A, B, G, S, V) is performed.

7. Method according to any preceding claim, wherein
when a landmark (A, B, G, S, V) captured with the capture unit (4) is detected that has no counterpart in the global map, a global position of this new landmark (A, B, G, S, V) is calculated depending on relative positions of other landmarks (A, B, G, S, V) captured with the capture unit (4) and/or depending on a calculated global position of the vehicle (1).

8. Method according to any preceding claim, wherein
the type of a position deviation is analyzed and, depending on that, the error statistics are determined.

9. Method according to claim 8, wherein
in this analysis the orientation of the position deviation and/or the distance of the capture unit (4) from the landmark (A, B, G, S, V) as types of position deviation are taken into account.

10. Method for self-localization of a vehicle (1), wherein
the global position of the vehicle (1) is determined depending on a digital map (7), wherein the suitability of using the digital map (7) for self-localization is evaluated depending on a method according to any of claims 1 to 9.

11. Evaluation system (6) for evaluating a digital map (7), comprising a capture unit (4) of a vehicle (1) and an evaluation unit (5), wherein the evaluation system (6) is configured to perform a method according to any of the preceding claims.

## Revendications

1. Méthode d'évaluation d'une carte numérique (7), comprenant les opérations suivantes :
- capture de l'environnement (3) d'un véhicule (1) avec au moins une unité de capture (4) du véhicule (1);
- création d'une carte relative de l'environnement sur la base des informations capturées, avec les positions relatives des points de repère (A, B, G, S, V) dans l'environnement (3);
- mise à disposition d'une carte globale de l'environnement (3) avec les positions globales des points de repère (A, B, G, S, V);
- génération de plusieurs hypothèses de mise à jour pour la carte numérique (7) à partir des informations de position des points de repère (A, B, G, S, V) dans la carte relative et/ou à partir des informations de position des points de repère (A, B, G, S, V) dans la carte globale, où une hypothèse de mise à jour est générée lorsqu'une déviation de position pour un point de repère (A, B, G, S, V) par rapport à une position globale d'au moins un objet de référence (A, B, G, S, V, 1) se produit ;
- détermination d'une statistique d'erreur pour au moins certaines des déviations de position;
- évaluation de la statistique d'erreur; et
- en fonction de l'évaluation de la statistique d'erreur, jugement de la possibilité qu'au moins une hypothèse de mise à jour de la carte numérique (7), en particulier la carte numérique complète (7), soit adaptée à l'auto-localisation du véhicule (1), **caractérisée par le fait que** pour la génération d'une hypothèse de mise à jour, un point de repère (A, B, G, S, V) capturé par l'unité de capture (4) est sélectionné selon un principe aléatoire, où la position globale de ce point de repère (A, B, G, S, V) choisi aléatoirement est évaluée et, lors de cette évaluation, la position relative de ce point de repère (A, B, G, S, V) n'est pas prise en compte, et la position globale de ce point de repère (A, B, G, S, V) est calculée en fonction des positions relatives d'autres points de repère (A, B, G, S, V) capturés lors du même ou d'un autre processus de capture par l'unité de capture (4), où, en fonction de cette position globale calculée, un terme d'erreur est déterminé et fourni à la statistique d'erreur, où la position globale calculée du point de repère (A, B, G, S, V) sélectionné est comparée à la position globale de ce point de repère (A, B, G, S, V) dans la carte globale, et lorsqu'une déviation de position entre ces positions globales se produit, cette déviation de position est constituée comme terme d'erreur.

2. Méthode selon la revendication 1, où
le processus d'évaluation est entièrement réalisé dans le véhicule (1).

3. Méthode selon l'une des revendications précédentes, où
un résultat d'évaluation du processus d'évaluation, produit dans le véhicule (1), est transmis à un backend externe (8) au véhicule (1), où dans le backend (8) des résultats d'évaluation d'une flotte de véhicules contenant plusieurs véhicules sont conservés, où dans le backend (8) le résultat d'évaluation est comparé aux résultats d'évaluation de la flotte de véhicules et, en fonction de cette comparaison, un résultat d'évaluation final est généré et fourni au véhicule (1).

4. Méthode selon l'une des revendications précédentes, où,
lors de l'évaluation de la statistique d'erreur, une erreur moyenne pour l'ensemble du système est définie, où les termes d'erreur caractérisant les déviations de position sont moyennés et l'erreur moyenne est comparée au terme d'erreur moyen, et où, en fonction de cette comparaison, jugement est porté sur la possibilité qu'au moins une hypothèse de mise à jour de la carte numérique (7), en particulier la carte numérique complète (7), soit adaptée à l'auto-localisation du véhicule (1).

5. Méthode selon l'une des revendications précédentes, où,
avant la génération d'hypothèses de mise à jour, un alignement de cartes entre la carte globale et la carte relative est effectué, notamment afin de déterminer une position globale du véhicule (1).

6. Méthode selon la revendication 5, où,
en fonction de l'alignement de cartes, une correspondance entre les positions relatives des points de repère (A, B, G, S, V) et les positions globales des points de repère (A, B, G, S, V) est établie.

7. Méthode selon l'une des revendications précédentes, où,
lorsqu'il est reconnu qu'un point de repère (A, B, G, S, V) capturé par l'unité de capture (4) n'a pas de correspondant dans la carte globale, une position globale de ce nouveau point de repère (A, B, G, S, V) est calculée en fonction des positions relatives d'autres points de repère (A, B, G, S, V) capturés par l'unité de capture (4) et/ou en fonction d'une position globale calculée du véhicule (1).

8. Méthode selon l'une des revendications précédentes, où
la nature d'une déviation de position est analysée et, en fonction de celle-ci, la statistique d'erreur est déterminée.

9. Méthode selon la revendication 8, où,
lors de cette analyse, l'orientation de la déviation de position et/ou la distance de l'unité de capture (4) par rapport au point de repère (A, B, G, S, V) sont prises en compte comme types de déviation de position.

10. Méthode d'auto-localisation d'un véhicule (1), où
la position globale du véhicule (1) est déterminée en fonction d'une carte numérique (7), où la faisabilité de l'utilisation de la carte numérique (7) pour l'auto-localisation est évaluée en fonction d'une méthode selon l'une des revendications 1 à 9.

11. Système d'évaluation (6) pour l'évaluation d'une carte numérique (7), comprenant une unité de capture (4) d'un véhicule (1) et une unité d'évaluation (5), où le système d'évaluation (6) est conçu pour exécuter une méthode selon l'une des revendications précédentes.
